(19) **Europäisches Patentamt**

**European Patent Office**

**Office européen des brevets**

(11) **EP 1 369 605 A2**

(12) **EUROPÄISCHE PATENTANMELDUNG**

(43) Veröffentlichungstag:
   **10.12.2003 Patentblatt 2003/50**

(51) Int Cl.7: **F16C 17/03**

(21) Anmeldenummer: **03012645.2**

(22) Anmeldetag: **04.06.2003**

(84) Benannte Vertragsstaaten:
   **AT BE BG CH CY CZ DE DK EE ES FI FR GB GR HU IE IT LI LU MC NL PT RO SE SI SK TR**
   Benannte Erstreckungsstaaten:
   **AL LT LV MK**

(30) Priorität: **06.06.2002 DE 10225008**

(71) Anmelder: **Main-Metall-Giesserei Fritz Schorr GmbH & Co. KG**
   **66885 Altenglan (DE)**

(72) Erfinder:
   • **Spiegel, Klaus, Prof. Dr. Ing.**
     **40627 Düsseldorf (DE)**
• **Rodermund, Heribert, Dr. Ing.**
  **67685 Schwedelbach (DE)**
• **Hagenhoff, Magnus, Dipl. Ing.**
  **66869 Kusel (DE)**
• **Buhl, Wolfgang**
  **66885 Altenglan (DE)**

(74) Vertreter:
   **Feder, Wolf-Dietrich, Dr. Dipl.-Phys. et al**
   **Dr. Wolf-D. Feder,**
   **Dipl.-Ing. P.-C. Sroka**
   **Dominikanerstrasse 37**
   **40545 Düsseldorf (DE)**

(54) **Gleitlager**

(57)   Ein Gleitlager, bei dem sich ein rotierendes Maschinenelement (4) auf einem ruhenden Tragelement (1) über auf dem Tragelement angeordnete, als Kippklötze (2.3, 2.4) ausgebildete Stützkörper abstützt. Das Maschinenelement (4) gleitet auf ihm zugewandten Gleitflächen (2.31, 2.41) der Kippklötze (2.3, 2.4), denen Schmierstoff zugeführt wird. Die vom Maschinenelement (4) abgewandten Rückseiten der Kippklötze (2.3, 2.4) sind jeweils mit einem konvex ausgebildeten Kugelflächenabschnitt (2.32, 3.32) auf einem konkav aus- gebildeten Kugelflächenabschnitt (1.3, 1.4) der Stützflä- che des Tragelements (1) abgestützt. Der Krümmungs- radius des konkav ausgebildeten Kugelflächenab- schnittes ist jeweils um einen vorgegebenen Betrag grö- ßer als der Krümmungsradius des konvex ausgebilde- ten Kugelflächenabschnittes. Die Differenz der Krüm- mungsradien ist lediglich so groß, dass die maximale Flächenpressung zwischen der Rückseite der Kippklötze und der Stützfläche des Tragelements die Festigkeitswerte des Werkstoffs der Rückseite der Kippklötze nicht überschreitet.

Fig. 2 (Verlauf des Warm-Kalt-Öls)

## Beschreibung

Die Erfindung betrifft ein Gleitlager mit den Merkmalen aus dem Oberbegriff des Patentanspruchs 1.

Ein Gleitlager mit diesen Merkmalen ist beispielsweise in US-A 2 137 487 beschrieben.

Flüssigkeitsgeschmierte Radial-und Axialgleitlager werden meist bei hohen Drehfrequenzen eingesetzt, beispielsweise in Turbomaschinen oder hochtourigen Getrieben, um Reibungsverluste zu mindern und um Sicherheit gegen Lagerinstabilitäten in Form von selbsterregten Schwingungen zu erreichen.

Bei den oben erwähnten bekannten Gleitlagern stützen in üblicher Weise die Kippklötze, auch Kippsegmente oder Gleitschuhe genannt, das rotierende Maschinenelement, also entweder eine Welle beim Radiallager oder eine Spurscheibe beim Axiallager, gegen den ruhenden Teil der Maschine, also ein Tragelement ab.

Dabei ist die Einstellbarkeit der Kippklötze nach Höhe und Neigung von entscheidender Bedeutung für die Funktionstüchtigkeit und damit für die Tragfähigkeit. Bei starken Stossbelastungen zeigen sie aber eine gewisse Empfindlichkeit hinsichtlich Verschleiß oder plastischer Abplattung an den Unterstützungsstellen der Klotzrücken. Außer den bekannten harten Abstützungen über Kugelflächenabschnitte sind auch elastische Abstützungen bekannt, beispielsweise durch Federn oder Elastomermatten. Nachteilig sind hohe Pressungen bei den harten Unterstützungen und der dadurch bedingten Empfindlichkeit gegen Stoßbelastungen einerseits und zu große Nachgiebigkeit der elastischen Unterstützungen andererseits.

Bei harter Abstützung müssen die Klotzrückseiten und die Gegenflächen des äußeren Tragrings eine ausreichende Festigkeit und Härte aufweisen, um Beschädigungen durch Stoßbelastungen zu vermeiden. Andererseits ist es aus Gründen der Bindungsfestigkeit zwischen dem Stahl der als Kippklötze ausgebildeten Stützkörper und dem Lagermetall erforderlich, weiche kohlenstoffarme Einsatzstähle zu verwenden. Die Bindungszone zwischen Stahl und Lagerweißmetall darf nicht aufgekohlt und gehärtet werden, um eine gute Bindungsfestigkeit zwischen Stahl und Lagerweißmetall zu erreichen. Ein Härten darf deshalb nur an den Klotzrücken erfolgen. Dadurch verteuert sich die Herstellung des Lagers. Der Tragring, auf dem sich die Kippklötze abstützen, kann dagegen beliebig hart genug ausgeführt werden.

Der Erfindung liegt die Aufgabe zugrunde, ein Gleitlager mit den Merkmalen aus dem Oberbegriff des Patentanspruchs 1 so auszubilden, dass einerseits die Herstellungskosten verringert werden können und andererseits aber ein hochverschleißfestes Lager erhalten werden kann.

Die Lösung dieser Aufgabe erfolgt erfindungsgemäß mit den Merkmalen aus dem kennzeichnenden Teil des Patentanspruchs 1.

Vorteilhafte Weiterbildungen der Erfindung sind in den abhängigen Ansprüchen beschrieben.

Bei dem in US-A 2 137 487 beschriebenen Gleitlager ist bereits angegeben, dass im Hinblick auf die Unterstützungsflächen zwischen den Kippklötzen und dem Tragelement der Krümmungsradius des konkav ausgebildeten Kugelflächenabschnitts um einen kleinen Betrag größer sein soll als der Krümmungsradius des konvex ausgebildeten Kugelflächenabschnitts. Dies ist notwendig, damit ein ausreichendes Kippen der Kippklötze und dadurch das Enstehen eines Schmierkeils zwischen dem rotierenden Maschinenelement und den ihm zugewandten Gleitflächen der Kippklötze sichergestellt ist. Es ist aber bisher nicht bekannt, wie groß dieser Unterschied in den Krümmungsradien maximal sein darf, um einen zu raschen Verschleiß des Lagers zu vermeiden.

Der Grundgedanke der Erfindung besteht in der Erkenntnis, dass die Differenz dieser Krümmungsradien lediglich so groß sein darf, dass die maximale Flächenpressung zwischen der Rückseite der Kippklötze und der Stützfläche des Tragelements die Festigkeitswerte des Werkstoffs der Rückseite der Kippklötze nicht überschreitet.

Dabei können als Grundlage für die Berechnung eines Maximalwertes für den Unterschied der Krümmungsradien die Formeln von Heinrich Hertz verwendet werden, die einen Zusammenhang zwischen der Flächenpressung in der Kontaktzone zwischen einem konvexen und einem konkaven Kugelflächenabschnitt und dem resultierenden Krümmungsradius der beiden Flächen in Abhängigkeit von bestimmten Materialkonstanten angeben.

Es hat sich gezeigt, dass die maximale relative Differenz der Krümmungsradien zwischen dem konvex ausgebildeten Kugelflächenabschnitt und dem konkav ausgebildeten Kugelflächenabschnitt durch folgende Formel gegeben ist:

$$\frac{\Delta R}{R_2} \leq \frac{R_2 \cdot \sqrt{\dfrac{2\pi^3 H^3}{3 \cdot F \cdot E_{rsl}^2}}}{1 + R_2 \cdot \sqrt{\dfrac{2\pi^3 H^3}{3 \cdot F \cdot E_{rsl}^2}}}$$

Die in dieser Formel verwendeten Größen haben folgende Bedeutung.

$R_1$ : Krümmungsradius des konvexen Kugelflächenabschnitts
$R_2$ : Krümmungsradius des konkaven Kugelflächenabschnitts
$\Delta R = R_2 - R_1$, alle in der Maßeinheit m
$E_{rsl}$ : resultierender Elastizitätsmodul nach der Formel

$$Ersl = \frac{2}{\frac{1-V_1^2}{E1} + \frac{1-V_2^2}{E_2}}$$

wobei $E_1$ und $E_2$ jeweils der Elastizitätsmodul des Materials der im Kontakt befindlichen Kugelflächen ist und $V_1$ und $V_2$ die entsprechenden Quertraktionszahlen sind.

$E_1$, $E_2$, $E_{rsl}$: Elastizitätsmoduln in der Maßeinheit Pa
H : Die Werkstoffhärte als Brinell-Härte in der Maßeinheit Pa
F : Die größte auftretende Belastungskraft.in der Maßeinheit N

Die erfindungsgemäße Ausbildung ist sowohl bei Radiallagern als auch bei Axiallagern vorteilhaft anwendbar.
Durch eine Annäherung der beiden Krümmungsradien kann sich ein resultierender Krümmungsradius gemäß der Formel

$$Rrsl = \frac{1}{\frac{1}{R_1} - \frac{1}{R_2}}$$

ergeben, der beträchtlich größer ist als die einzelnen Krümmungsradien der jeweiligen Kontakt- und Gegenflächen. Damit verringert sich aber auch die maximale Flächenpressung zwischen Kippklotz und Tragelement. Gemäß der Formel

$$R_{rsl} = \sqrt{\frac{3F \cdot E_{rsl}^2}{2\pi^3 H^3}}$$

Nähert man also die Krümmungsradien soweit aneinander an, dass noch das notwendige einwandfreie Ankippen der Kippklötze möglich ist, dann können selbst Stoßbelastungen, die ein Mehrfaches der statischen Last betragen, die Rückseiten der Kippklötze nicht zerstören und zwar selbst dann nicht, wenn sie ungehärtet sind.
Wie in den Unteransprüchen und anhand von Ausführungsbeispielen weiter unten näher erläutert, können dann zusätzliche Maßnahmen getroffen werden, die das kontrollierte Kippen der Klötze erleichtern, womit die Betriebssicherheit verbessert wird. Bei Radiallagern erreicht man mit einem konvexen Kugelabschnitt an der Klotzrückseite und einem konkaven Kugelabschnitt im Tragring, außerdem einen stabilen Gleichgewichtszustand, eine gute Einstellbarkeit der Klotzgleitfläche gegenüber der Wellenfläche und ein Vermeiden von Kantenpressungen.
Wie ebenfalls weiter unten anhand von Ausführungsbeispielen erläutert, ist es bei Ausführungsformen des erfindungsgemäßen Gleitlagers als Radiallager vorteilhaft, wenn jeweils zwischen zwei benachbarten Kippklötzen ein die beiden Kippklötze in Umfangsrichtung abstützendes Zwischenstück angeordnet ist. Diese Zwischenstücke können Teile eines mit dem Tragring des Radiallagers fest verbundenen Führungsringes sein, sie können aber auch als einzelne Distanzhalterstücke ausgebildet sein, von denen jedes am Tragring befestigt ist.
Durch diese Distanzhalter kann zusätzlich eine Trennung der in Umfangsrichtung aus den Schmierspalten austretenden warmen Ölströme von den von außen zugeführten kalten Kühl- und Schmierölströmen erreicht werden.
Durch die weiter unten erläuterte Ausbildung der Distanzhalter kann weiterhin eine Erleichterung des Ankippens der Kippklötze zur Ausbildung des konvergenten Schmierspalts zwischen Wellen- und Klotzgleitfläche erreicht werden.
Auch wenn an Stelle von einzelnen Distanzhaltern ein Führungsring verwendet wird, der mit dem äußeren Tragring fest verbunden ist und der sowohl kreiszylindrisch ausgebildete Kippklötze als auch rechteckige Kippklötze aufnehmen kann, läßt sich eine gute Ölführung mit Trennung von Warm- und Kaltöl erreichen.
Es hat sich weiterhin in allen Fällen als zweckmäßig erwiesen, wenn in jedem der Kippklötze ein oder mehrere von der Rückseite zur Gleitfläche verlaufende Drosselbohrungen angeordnet sind, die den Schmierfilm vom Schmierspalt zur Klotzrückseite führen, um diese mit Drucköl zu versorgen. Hierdurch kann der Verschleiß in diesem Bereich noch weiter herabgesetzt werden. Weiterhin kann es vorteilhaft sein, wenn jede Drosselbohrung in eine an der Rückseite des Kippklotzes zwischen dem Kippklotz und der Stützfläche des Tragelements ausgebildete Druckkammer einmündet. Diese Ausbildung ist möglich, ohne dass das Abwälzen der Kugelflächenabschnitte aufeinander behindert wird. So kann die Druckkammer beispielsweise durch einen in einer ringförmigen Nut an der Rückseite des Kippklotzes angeordneten Dichtungsring seitlich begrenzt sein.

Hierbei können die Klotzgleitfläche und die Druckkammerfläche sowie der Strömungswiderstand der Drosselbohrung so aufeinander abgestimmt werden, dass eine zu große Anhebekraft oder ein zu starker Ölverlust aus dem Schmierfilm vermieden wird. Hierbei muss auch der Durchmesserunterschied zwischen dem Wellendurchmesser und dem Krümmungsdurchmesser der Klotzgleitflächen wegen seines Einflusses auf die Druckentwicklung im Schmierspalt berücksichtigt werden.

Im Folgenden werden anhand der beigefügten Zeichnungen Ausführungsbeispiele für ein Gleitlager nach der Erfindung näher erläutert.

In den Zeichnungen zeigen

| | |
|---|---|
| Figur 1A | im Schnitt quer zur Lagerachse ein als Radiallager ausgebildetes Gleitlager in einer ersten Ausführungsform; |
| Figur 1B | einen Axialschnitt durch das Gleitlager nach Fig. 1A entsprechend dem wagerechten Durchmesser aus Fig. 1A; |
| Figur 1C | einen Axialschnitt durch das Gleitlager nach Fig. 1A im Sinne des in Fig. 1A senkrechten Durchmessers; |
| Figur 2 | die untere Hälfte des Gleitlagers in einer Darstellung analog Fig. 1A gegenüber Fig. 1A vergrößert; |
| Figur 3A | in einer Darstellung analog Fig. 1A eine zweite Ausführungsform eines als Radiallager ausgebildeten Gleitlagers; |
| Figur 3B | eine Aufsicht auf das Gleitlager nach Fig. 3A senkrecht zur Achsrichtung; |
| Figur 3C | einen Axialschnitt durch das Gleitlager nach Fig. 3A; |
| Figur 4A | in einer stark schematisierten Darstellung einen Teil eines als Axiallager ausgebildeten Gleitlagers in einem Schnitt senkrecht durch die Spurscheibe; |
| Figur 4B | das Gleitlager nach Fig. 4A in stark schematisierter Aufsicht auf zwei Kippklötze; |
| Figur 5A | eine Aufsicht auf einen außermittig unterstützten Kippklotz ei- nes Axiallagers mit konkavem Kugelflächenabschnitt am Kippklotz; |
| Figur 5B | einen Schnitt nach der Linie VB-VB in Fig. 5A; |
| Figur 5C u. Figur 5D | in einer Darstellung analog Fig. 5A und 5B einen außermittig unterstützten Kippklotz mit einem konvexen Kugelflächenabschnitt an der Rückseite; |
| Figur 5E u. Figur 5F | in einer Darstellung analog Fig. 5A und 5B einen mittig unterstützten Kippklotz mit konkavem Kugelflächenabschnitt an der Rückseite; |
| Figur 5G u. Figur 5H | in einer Darstellung analog Fig. 5A und 5B den mittig unterstützten Kippklotz mit konvexem Kugelflächenabschnitt an der Rückseite; |
| Figur 5I u. Figur 5K | in einer Darstellung analog Fig. 5A und 5B einen im Querschnitt runden Kippklotz mit konkavem Kugelflächenabschnitt an der Rückseite; |
| Figur 5L u. Figur 5M | in einer Darstellung analog Fig. 5A und 5B einen Kippklotz mit rundem Querschnitt und konvexem Kugelflächenabschnitt an der Rückseite. |

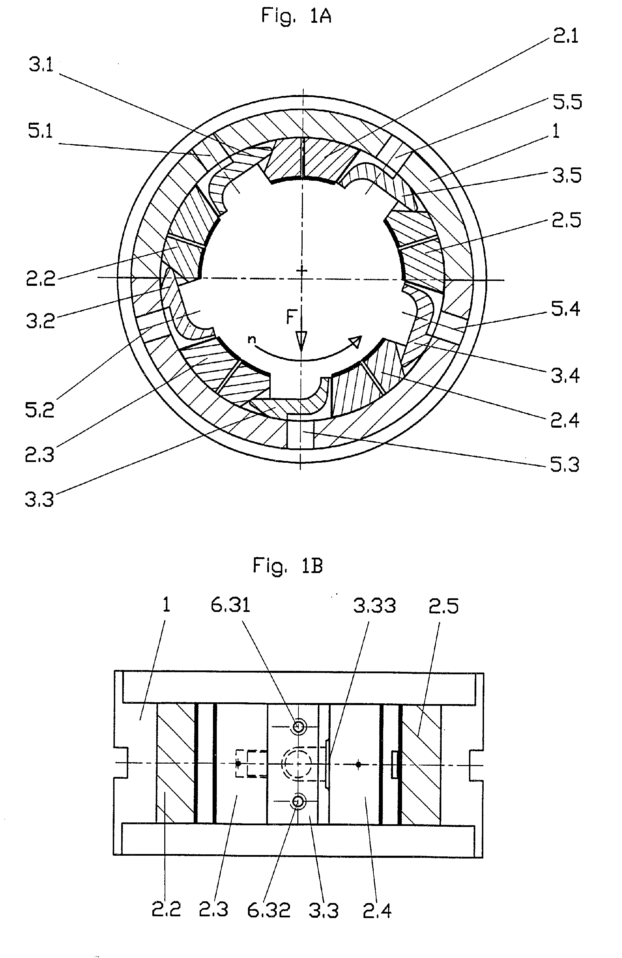

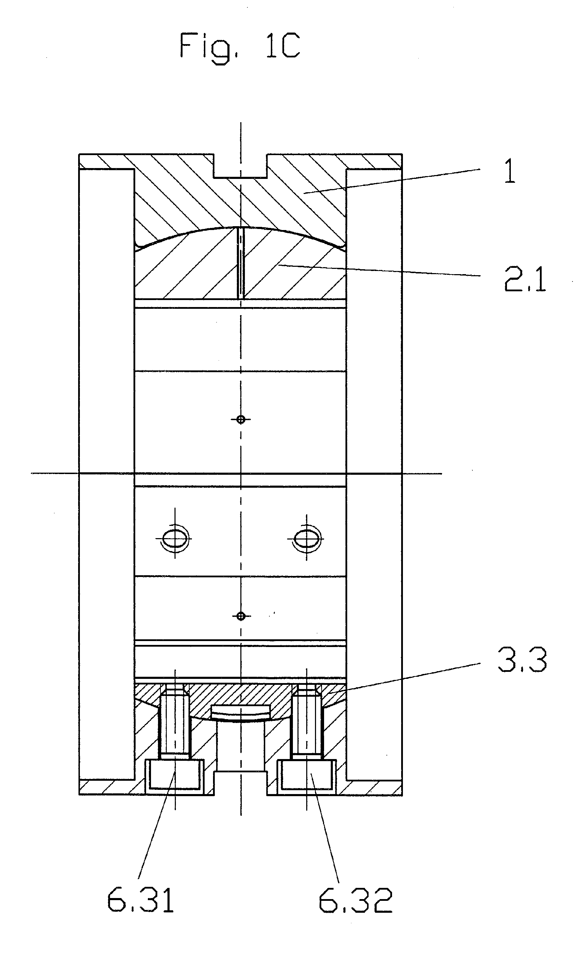

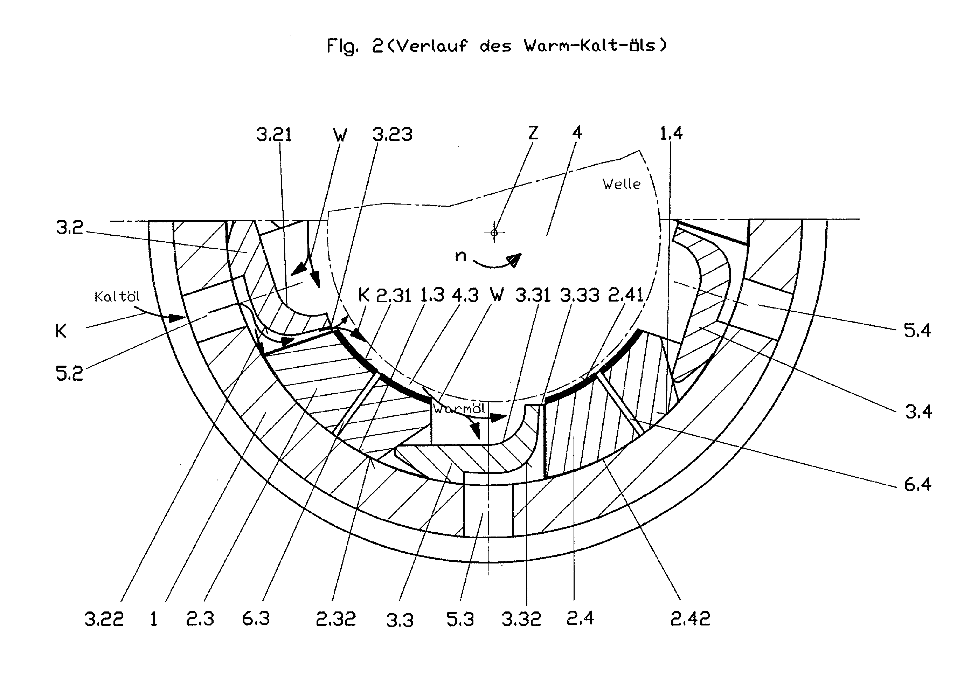

Die Figuren 1A, 1B, 1C und 2 zeigen ein als Radiallager ausgebildetes Gleitlager.

Es besitzt einen ruhenden Tragring 1, in dem eine in Pfeilrichtung n rotierende Welle 4 gelagert ist. Auf der hohlzylindrischen Stützfläche des Tragrings 1 sind mehrere Kippklötze 2.1 bis 2.5 zur Abstützung der Welle 4 angeordnet, die jeweils auf einem Teil ihrer Oberfläche von den ihr zugewandten Gleitflächen der Kippklötze umfasst wird. Zur weiteren Erläuterung dieser Abstützung dient vor allem Fig. 2, auf der die Kippklötze 2.3 und 2.4 mit den Gleitflächen 2.31 und 2.41 zu erkennen sind. Die Rückseiten der Kippklötze 2.1 bis 2.5 sind als konvexe Kugelflächenabschnitte ausgebildet. Bei den Kippklötzen 2.3 und 2.4 sind dies die Abschnitte 2.32 bzw. 2.42. Diese konvexen Kugelflächenabschnitte stützen sich auf konkaven Kugelflächenabschnitten ab, die in der Stützfläche des Tragrings 1 angeordnet sind. Im Bereich der Kippklötze 2.3 und 2.4 sind dies die konkaven Kugelflächenabschnitte 1.3 und 1.4.

Hierbei sind bei dem vorliegenden Ausführungsbeispiel und allen weiteren beschriebenen Ausführungsbeispielen die Kugelflächenabschnitte so ausgebildet, dass der Krümmungsradius des konkav ausgebildeten Kugelflächenabschnitts um einen vorgegebenen Betrag größer ist als der Krümmungsradius des konvex ausgebildeten Kugelflächenabschnitts, wobei die Differenz der Krümmungsradien lediglich so groß ist, dass die maximale Flächenpressung zwischen der Rückseite der Kippklötze und der Stützfläche des Tragelements bzw. Tragrings die Festigkeitswerte des Werkstoffs der Kippklötze nicht überschreitet. Zur genauen Bestimmung der relativen Differenz der Krümmungsradien, dient die eingangs angegebene Formel, auf die an dieser Stelle noch einmal verwiesen wird. Diese Differenzen der Krümmungsradien werden im Folgenden auch bei den weiter beschriebenen Ausführungsformen nicht mehr erläutert.

Es wird weiterhin daraufhingewiesen, dass die Ausbildung der konkaven Kugelflächenabschnitte am Tragring so ist, dass die zugehörigen Kugelmittelpunkte auf der Quermittelebene sowie auf der Zentralachse Z des Tragrings 1 liegen.

Im vorliegenden Ausführungsbeispiel ist jeweils zwischen zwei benachbarten Kippklötzen ein die beiden Kippklötze in Umfangsrichtung abstützendes Zwischenstück angeordnet und zwar sind dies Distanzhalterstücke 3.1 bis 3.5, die fest mit dem Tragring 1 jeweils über Schraubverbindungen 6.31 und 6.32 (s. Figuren 1B und 1C) verbunden sind.

Diese Distanzhalterstücke dienen außer zur Fixierung der Kippklötze auch zur Trennung von Warm- und Kaltölströmen im Gleitlager. Die genauere Ausbildung ist vor allem Fig. 2 zu entnehmen.

Als Beispiel werden die Distanzhalterstücke 3.2 und 3.3 näher betrachtet. Jedes Distanzstück 3.2 bzw. 3.3 stützt an seiner in Drehrichtung n gesehen hinteren Seite den dort liegenden benachbarten Kippklotz 2.3 bzw. 2.4 mit einer Stützfläche ab, die von der entsprechenden Gegenfläche des Kippklotzes hinterschnitten wird, derart, dass eine Radialbewegung des Kippklotzes nach innen blockiert ist. An seiner in Drehrichtung n gesehen vorderen Seite wird der dort liegende Kippklotz 2.3 an einer rückspringenden Schrägfläche abgestützt zur Erleichterung des Ankippens des Kippklotzes und damit der Öffnung eines Schmierspaltes 4.3 zwischen der Oberfläche der Welle 4 und der Gleitfläche 2.31 des Kippklotzes 2.3 entgegen der Drehrichtung n. Wie an den in Fig. 2 dargestellten Distanzstücken 3.2 und 3.3 erkennbar, besitzt jedes Distanzstück eine von seiner dem Tragring 1 zugewandten Außenseite zur inneren hinteren Seite laufende, sich konvex nach innen krümmende Führungsfläche 3.22 bzw. 3.32 zur Frischölzuführung. Das zugeführte Frischöl tritt durch einen Spalt 3,23 bzw. 3,33 zwischen der hinteren Kante des Distanzhalterstückes und der vorderen Kante des jeweiligen Kippklotzes aus. Die Führung des Kaltöls durch Zuführungsöffriungen 5.1 bis 5.5 im Tragring 1 ist Fig. 2 zu entnehmen und dort mit den Pfeilen K bezeichnet.

Weiterhin besitzt jedes Distanzhalterstück, also beispielsweise die Distanzhalterstücke 3.2 und 3.3, an seiner der Welle 4 zugewandten Seite eine konkav ausgebildete Führungsfläche 3.21 bzw. 3.31 für die Abführung des Warmöls. Diese Ölführung ist in Fig. 2 mit Pfeilen W gekennzeichnet. Die Distanzhalterstücke sind so ausgebildet, dass sie eine weitgehende Trennung des aus einem vorangehenden Kippklotz in Umfangsrichtung austretenden Warmöls vom kühleren Frischöl, das direkt an die Eintrittskante des folgenden Klotzes gelangt, ermöglichen. Damit kann das Gleitlager nicht nur voll geflutet, sondern auch mit getrennter Warmölabführ hinter und Frischölzufuhr vor den Kippklötzen betrieben werden. So kann die Reibung zwischen den Kippklötzen verringert werden.

In die Kippklötze 2.1 bis 2.5 sind jeweils Drosselbohrungen eingearbeitet, die von der Außenseite des Kippklotzes zur Gleitfläche verlaufen. In Fig. 2 sind die Drosselbohrungen 6.3 und 6.4 an den Kippklötzen 2.3 und 2.4 zu erkennen. Durch diese Drosselbohrungen gelangt Drucköl vom Schmierspalt 4.3 an die Rückseite der Kippklötze und verbessert deren Anstellung, während die unbelasteten Kippklötze näher zur Welle 4 geschoben werden. Hierauf wird weiter unten anhand von anderen Ausführungsbeispielen noch näher eingegangen.

In Figuren 1A bis 2 sind die Distanzhalterstücke für eine Vorzugsdrehrichtung der Welle 4 in Pfeilrichtung n ausgelegt. Sollte das Lager für beide Drehrichtungen verwendbar sein, so müßten die Distanzhalterstücke symmetrisch ausgebildet werden.

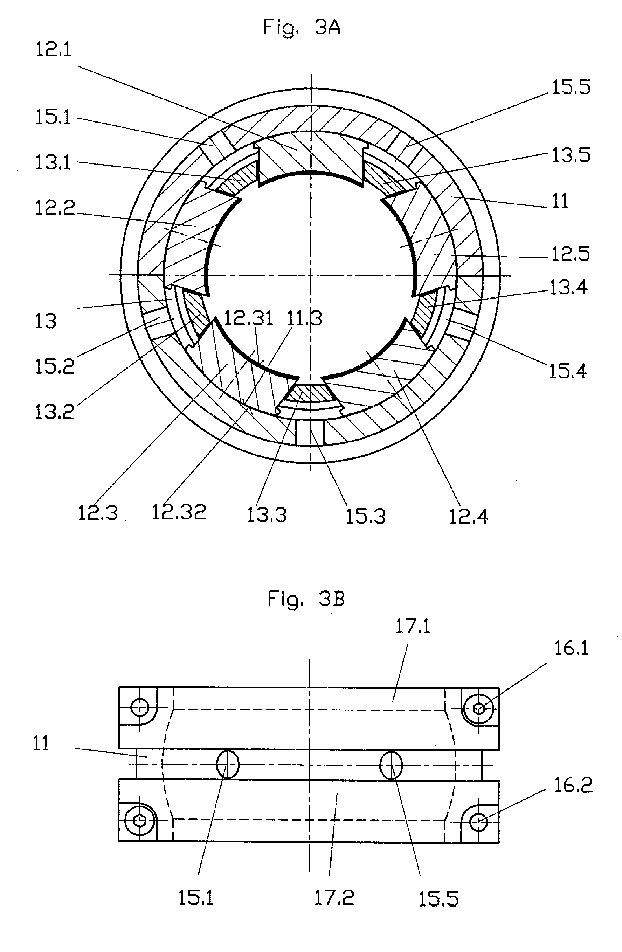

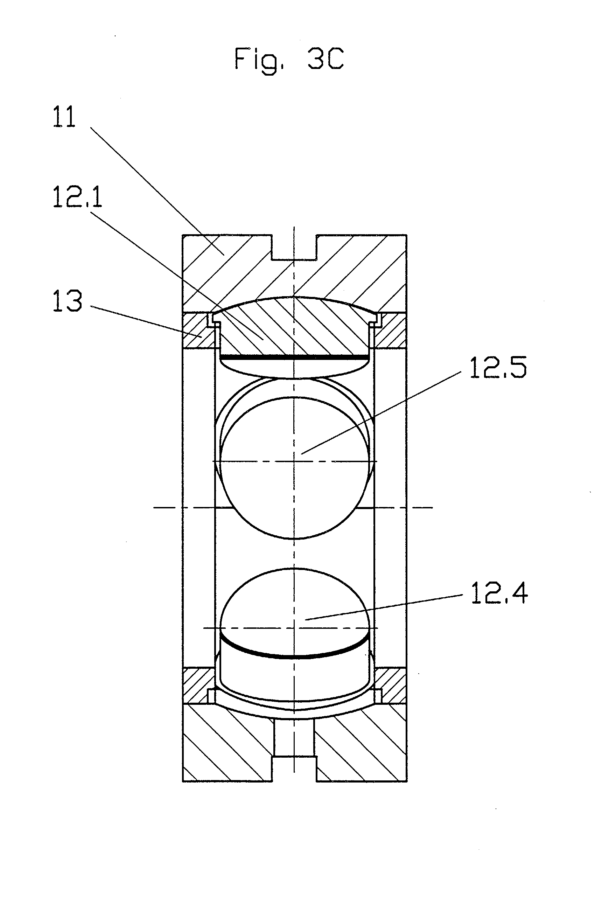

Bei einer derartigen Ausführungsform können dann an Stelle der Distanzhalterstücke Zwischenstücke 13.1 bis 13.5 treten, die Teile eines mit dem Tragring 11 fest verbundenen Führungsringes 13 sind. Eine derartige Ausführungsform wird im Folgenden anhand der Figuren 3A, 3B und 3C erläutert.

Auch dieses Gleitlager ist als Radiallager ausgebildet und besitzt einen Tragring 11, auf dem sich symmetrisch ausgebildete Kippklötze 12.1 bis 12.5 in der bereits beschriebenen Weise über Kugelflächenabschnitte abstützen. In Fig. 3A sind am Beispiel des Kippklotzes 12.3 dessen Gleitfläche 12.31 sowie der konvexe Kugelflächenabschnitt 12.32 an der Rückseite des Kippklotzes und der konkave Kugelflächenabschnitt 11.3 an der Innenfläche des Tragrings 11 zu erkennen.

Die Frischölzufuhr erfolgt über Öffnungen 15.1 bis 15.5 im Tragring 11. Tragring 11 und Führungsring 13 sind über Schraubverbindungen 16.1 und Kegelstiftverbindungen 16.2 miteinander verbunden.

Diese Ausführungsform eignet sich grundsätzlich für beide Drehrichtungen der in den Figuren 3A bis 3C nicht dargestellten Welle. Das Kühlöl wird dabei zwischen dem Tragring 11 und dem Führungsring 13 zugeführt und fließt danach durch sichelförmige Ringspalte zwischen den Öffnungen im Führungsring und den in diesem Falle kreiszylindrisch ausgebildeten Kippklötzen 12.1 bis 12.5 (s. Fig. 3C) in die Gleitflächen der Kippklötze. Hier wird eine einwandfreie Trennung von Warm- und Kaltöl nicht erreicht, dafür ist aber dieses Lager grundsätzlich für beide Drehrichtungen geeignet.

Im Folgenden werden Ausführungsbeispiele erläutert, bei denen das Gleitlager als Axiallager ausgebildet ist.

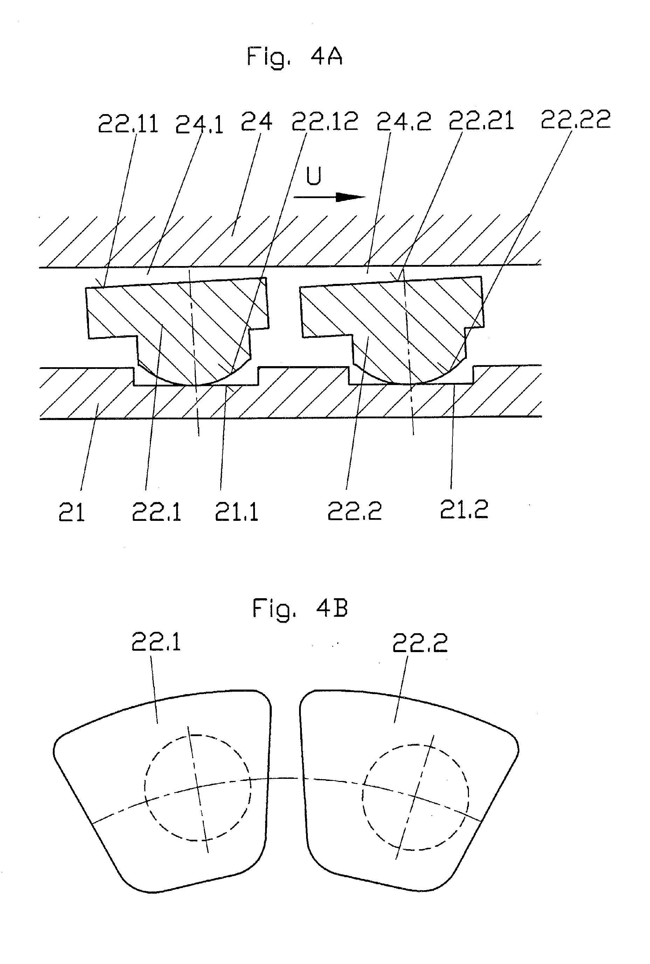

Die Figuren 4A und 4B zeigen einen Teil eines Axiallagers in stark schematisierter Darstellung. Eine in Pfeilrichtung U rotierende Spurscheibe 24 stützt sich über Kippklötze 22.1 und 22.2 auf einer Tragplatte 21 ab. Die Kippklötze 22.1 und 22.2 besitzen an der der Spurscheibe 24 zugewandten Seite Gleitflächen 22.11 und 22.21. Zwischen diesen und der Oberfläche der Spurscheibe 24 bilden sich Schmierspalte 24.1 bzw. 24.2. Bei dem in Fig. 4A dargestellten Beispiel besitzen die Kippklötze an ihrer Rückseite konvex ausgebildete Kugelflächenabschnitte 22.12 bzw. 22.22, die in konkaven Kugelflächenabschnitten 21.1 bzw. 21.2 der Tragplatte 21 gelagert sind.

Für die Krümmungsradien der konvexen und konkaven Kugelflächenabschnitte gelten die bereits erwähnten Bedingungen.

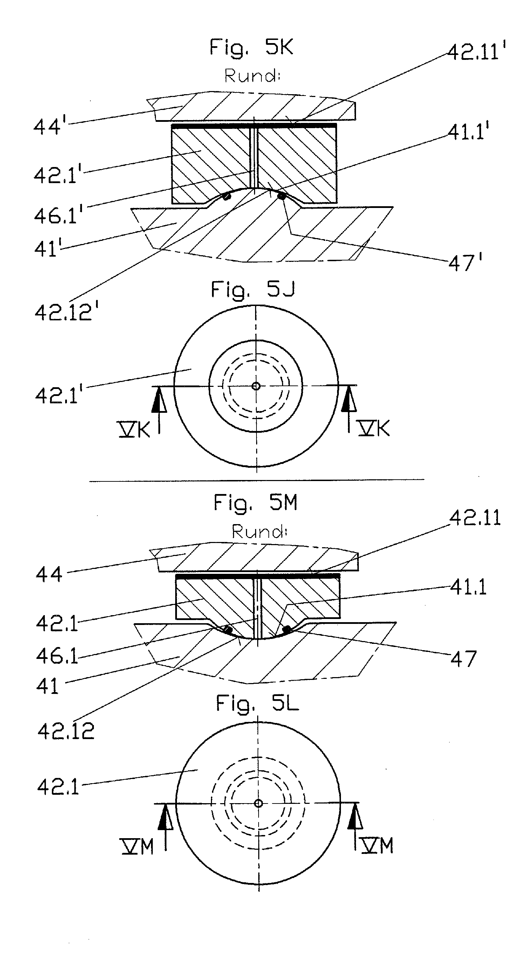

Die Kippklötze können, wie im Folgenden gezeigt, in ihrem Umriss im wesentlichen rechteckig, kreissektorförmig oder rund ausgebildet sein. Dabei kann ihre Abstützung über die Kugelflächenabschnitte auf der Tragplatte unterschiedlich erfolgen. So kann einerseits im Unterschied zur Ausbildung nach Fig. 4A der konkave Kugelflächenabschnitt auch am Kippklotz angeordnet sein, während sich der konvexe Kugelflächenabschnitt auf der Tragplatte befindet. Weiterhin kann die Abstützung durch die Kugelflächenabschnitte mittig oder außermittig erfolgen. Dies wird im Folgenden anhand der Figuren 5A bis 5M erläutert.

Die Figuren 5A bis 5D zeigen einen außermittig unterstützten Kippklotz.

Gemäß Figuren 5A und 5B stützt sich die Spurscheibe 24' auf der Gleitfläche 22.11' des Kippklotzes 22.1' ab, und dieser ruht über einen konkaven Kugelflächenabschnitt 22.12' auf einem Kugelflächenabschnitt 21.1' der Tragplatte 21'.

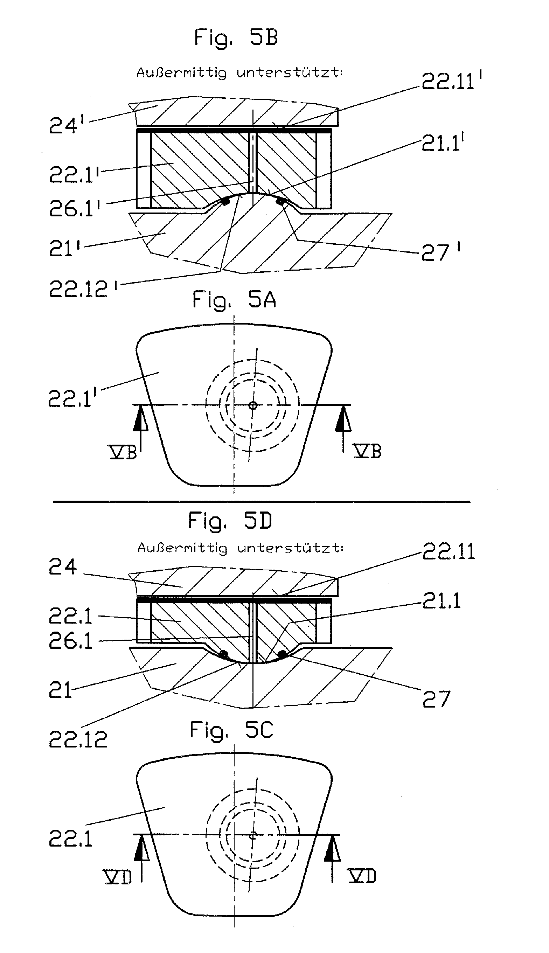

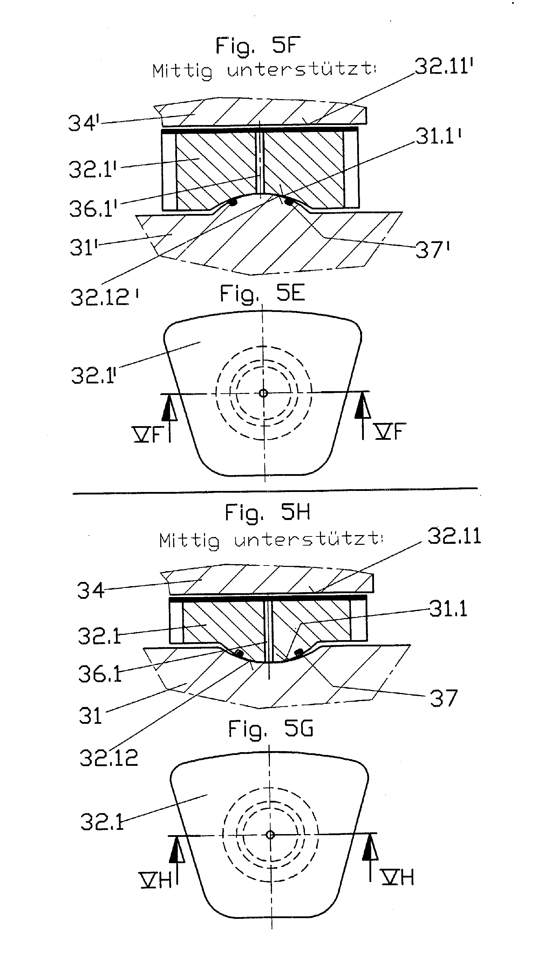

Gemäß Figuren 5C und 5D stützt sich die Spurplatte 24 auf der Gleitfläche 22.11 des Kippklotzes 22.1 ab und dieser ruht über den konvexen Kugelflächenabschnitt 22.11 an seiner Rückseite in einem konkaven Kugelflächenabschnitt 21.1 der Tragplatte 21.

Die Figuren 5E bis 5H zeigen einen mittig unterstützten Kippklotz.

Gemäß Figuren 5E und 5F stützt sich die Spurscheibe 34' über die Gleitfläche 32.11' des Kippklotzes 32.1' ab, und dieser ruht über den konkaven Kugelflächenabschnitt 32.12' auf einem konvexen Kugelflächenabschnitt 31.1' der Tragplatte 31'. Gemäß Figuren 5G und 5H stützt sich die Spurscheibe 34 über die Gleitfläche 32.11 auf dem Kippklotz 32.1 ab und dieser ruht über den konvexen Kugelflächenabschnitt 32.12 in einem konkaven Kugelflächenabschnitt 31.1 der Tragplatte 31.

Die Figuren 5I bis 5M zeigen Kippklötze mit einem runden Umriss.

Gemäß Figuren 5I und 5K stützt sich die Spurscheibe 44' über die Gleitfläche 42.11' auf dem Kippklotz 42.1' ab, und dieser ruht über den konkaven Kugelflächenabschnitt 42.12' auf dem konvexen Kugelflächenabschnitt 41.1' der Tragplatte 41'.

Gemäß Figuren 5L und 5M stützt sich die Spurscheibe 44 über die Gleitfläche 42.11 auf dem Kippklotz 42.1 ab, und dieser ruht über den konvexen Kugelflächenabschnitt 42.12 in dem konkaven Kugelflächenabschnitt 41.1 der Tragplatte 41.

Auch bei den Aus-Führungsformen nach Figuren 5A bis 5M verläuft jeweils eine Drosselbohrung 26.1, 26.1', 36.1, 36.1', 46.1, 46.1' von den Gleitflächen durch den Kippklotz hindurch zum abstützenden Kugelflächenabschnitt. Die Drosselbohrungen münden bei diesen Ausführungsformen in Druckkammern an der Klotzrückseite zwischen dem Kippklotz und der Stützfläche der Tragplatte. Die Druckkammern werden durch einen in einer ringförmigen Nut an der Rückseite des Kippklotzes angeordneten Dichtungsring 27, 27', 37, 37', 47, 47' seitlich begrenzt. Wie bereits geschildert, gelangt durch diese Drosselbohrungen Drucköl vom Schmierspalt an die Rückseite der Kippklötze und verbessert deren Anstellung.

Bei Axiallagern können wie Fig. 4B zu entnehmen die Kippklötze 22.1, 22.2 längs eines Kreisrings, dessen Mittelpunkt auf der Achse der Spurscheibe liegt, in vorgegebenen gleichen Abständen angeordnet sein.

**Patentansprüche**

1.  Gleitlager, bei dem sich ein rotierendes Maschinenelement auf einem ruhenden Tragelement über auf dem Tragelement angeordnete, als Kippklötze ausgebildete Stützkörper abstützt, wobei mindestens ein Teil der Oberfläche des Maschinenelements auf den dem Maschinenelement zugewandten Gleitflächen der Kippklötze gleitet, denen Schmierstoff zugeführt wird, und bei dem die vom Maschinenelement abgewandten Rückseiten der Kippklötze jeweils mit einem konvex oder konkav ausgebildeten Kugelflächenabschnitt auf einem konkav oder konvex ausgebildeten Kugelflächenabschnitt der Stützfläche des Tragelements aufsitzen, wobei der Krümmungsradius des konkav ausgebildeten Kugelflächenabschnitts um einen vorgegebenen Betrag größer ist als der Krümmungsradius des konvex ausgebildeten Kugelflächenabschnitts, **dadurch gekennzeichnet, dass** die Differenz der Krümmungsradien lediglich so groß ist, dass die maximale Flächenpressung zwischen der Rückseite der Kippklötze (2.1 bis 2.5, 12.1 bis 12.5, 22.1, 22.2, 32.1, 42.1) und der Stützfläche des Tragelements (1, 11, 21, 31, 41) die Festigkeitswerte des Werkstoffs der Rückseite der Kippklötze nicht überschreiten.

2.  Gleitlager nach Anspruch 1 **dadurch gekennzeichnet, dass** die relative Differenz der Krümmungsradien gegeben ist durch die Formel:

$$\frac{\Delta R}{R_2} \leq \frac{R_2 \cdot \sqrt{\dfrac{2\pi^3 \cdot H^3}{3F \cdot E_{rsl}^2}}}{1 + R_2 \cdot \sqrt{\dfrac{2\pi^3 H^3}{3 \cdot F \cdot E_{rsl}^2}}}$$

    wobei $R_2$ = dem Radius des konkav ausgebildeten Kugelflächenabschnitts in m, $E_{rsl}$ = dem resultierenden Elastizitätsmodul der Werkstoffe der Rückseite der Kippklötze und des Tragelements in Pa, H = der Brinell-Härte des Werkstoffs der Rückseite der Kippklötze in Pa und F die größte auftretende Belastungskraft in N ist.

3.  Gleitlager nach Anspruch 1 oder 2, das als Radiallager ausgebildet ist, mit einer sich in einem ruhenden Tragring (1, 11) abstützenden rotierenden Welle (4), **dadurch gekennzeichnet, dass** auf der hohlzylindrischen Stützfläche des Tragrings (1,11) mehrere Stützflächenabschnitte (1.3, 1.4) angeordnet sind, die als konkave Kugelflächenabschnitte ausgebildet sind und auf denen konvexe Kugelflächenabschnitte (2.32, 3.32) aufsitzen, die jeweils an der Rückseite von mehreren längs des Umfangs des Tragrings (1, 11) angeordneten Kippklötzen (2.1 bis 2.5, 12.1 bis 12.5) ausgebildet sind.

4.  Gleitlager nach Anspruch 3, **dadurch gekennzeichnet, dass** die konkaven Kugelflächenabschnitte in Umfangsrichtung des Tragrings (1, 11) mit vorgegebenen gleichen Abständen angeordnet sind.

5.  Gleitlager nach Anspruch 3 oder 4, **dadurch gekennzeichnet, dass** die Kugelmittelpunkte der konkaven Kugelflächenabschnitte auf der Quermittelebene des Tragrings (1, 11) liegen.

6.  Gleitlager nach Anspruch 5, **dadurch gekennzeichnet, dass** die Kugelmittelpunkte der konkaven Kugelflächenabschnitte auf der Zentralachse (Z) des Tragrings (1, 11) liegen.

7.  Gleitlager nach einem der Ansprüche 3 bis 6, **dadurch gekennzeichnet, dass** entlang des Innenumfangs des Tragrings (1, 11) mehrere Kippklötze (2.1 bis 2.5, 12.1 bis 12.5) mit vorgegebenen Abständen voneinander angeordnet sind, wobei jeweils zwischen zwei benachbarten Kippklötzen ein die beiden Kippklötze in Umfangsrichtung abstützendes Zwischenstück (3.1 bis 3.5, 13.1 bis 13.5) angeordnet ist.

8.  Gleitlager nach Anspruch 7, **dadurch gekennzeichnet, dass** die Zwischenstücke (13.1 bis 13.5) Teile eines mit dem Tragring (11) festverbundenen Führungsringes (13) sind.

9.  Gleitlager nach Anspruch 7, **dadurch gekennzeichnet, dass** die Zwischenstücke als einzelne Distanzhalterstücke (3.1 bis 3.5) ausgebildet sind, von denen jedes am Tragring befestigt ist.

10. Gleitlager nach Anspruch 9, **dadurch gekennzeichnet, dass** die Distanzhalterstücke jeweils in Bezug auf die benachbarten Klötze symmetrisch ausgebildet sind.

**11.** Gleitlager nach Anspruch 9, **dadurch gekennzeichnet, dass** die Distanzhalterstücke (3.1 bis 3.5) jeweils in Bezug auf die benachbarten Kippklötze unsymmetrisch ausgebildet sind, indem jedes Distanzhalterstück (3.2, 3.3) an seiner in Drehrichtung (n) gesehen hinteren Seite den dort liegenden Kippklotz (2.3, 2.4) mit einer Stützfläche abstützt, die von der entsprechenden Gegenfläche des Kippklotzes hinterschnitten wird, derart, dass eine Radialbewegung des Kippklotzes nach innen blockiert ist, während es an seiner in Drehrichtung (n) gesehen vorderen Seite den dort liegenden Kippklotz (2.3) an einer rückspringenden Schrägfläche abstützt zur Erleichterung des Ankippens des Kippklotzes und der Öffnung eines Schmierspaltes (4.3) zwischen der Oberfläche der Welle (4) und der Gleitfläche (2.31) des Kippklotzes (2.3) entgegen der Drehrichtung.

**12.** Gleitlager nach Anspruch 11, **dadurch gekennzeichnet, dass** jedes Distanzhalterstück (3.2, 3.3) an seiner in Drehrichtung (n) gesehen hinteren Seite eine von seiner dem Tragring (1) zugewandten Rückseite zur inneren hinteren mit der entsprechenden vorderen Seitenkante des benachbarten Kippklotzes (2.3, 2.4) einen Spalt (3.23, 3.33) bildenden Seitenkante verlaufende, sich konvex nach innen krümmende Führungsfläche (3.22, 3.32) zur Frischölzuführung aufweist.

**13.** Gleitlager nach Anspruch 12, **dadurch gekennzeichnet, dass** jedes Distanzhalterstück (3.2, 3.3) an seiner der Welle (4) zugeordneten Seite eine Führungsfläche (3.21, 3.31) zur Warmölabfuhr aufweist.

**14.** Gleitlager nach Anspruch 1 oder 2, das als Axiallager ausgebildet ist mit einer sich auf einer Tragplatte abstützenden Spurscheibe, **dadurch gekennzeichnet, dass** in der Stützfläche der Tragplatte (21, 31, 41) mehrere Stützflächenabschnitte angeordnet sind, die als konkave oder konvexe Kugelflächenabschnitte ausgebildet sind und auf denen konvexe oder konkave Kugelflächenabschnitte aufsitzen, die jeweils an der Rückseite von mehreren auf der Tragplatte (21, 31,41) angeordneten Kippklötzen (22.1, 22.2, 31.1, 41.1) angeordnet sind.

**15.** Gleitlager nach Anspruch 14, **dadurch gekennzeichnet, dass** die Kippklötze (22.1, 22.2) längs eines Kreisrings, dessen Mittelpunkt auf der Achse der Spurscheibe (24) liegt, in vorgegebenen gleichen Abständen angeordnet sind.

**16.** Gleitlager nach einem der Ansprüche 1 bis 15, **dadurch gekennzeichnet, dass** in jedem der Kippklötze (2.1 bis 2.5, 22.1, 32.1, 42.1) ein oder mehrere von der Rückseite zur Gleitfläche verlaufenden Drosselbohrungen (6.1 bis 6.5, 26.1, 36.1, 46.1) angeordnet sind.

**17.** Gleitlager nach Anspruch 16, **dadurch gekennzeichnet, dass** jede Drosselbohrung (26.1, 36.1, 46.1) in eine an der Rückseite des Kippklotzes zwischen dem Kippklotz (22.1, 32.1, 42.1) und der Stützfläche des Tragelements (21, 31, 41) ausgebildete Druckkammer einmündet.

**18.** Gleitlager nach Anspruch 17, **dadurch gekennzeichnet, dass** die Druckkammer durch einen in einer ringförmigen Nut an der Rückseite des Kippklotzes (22.1, 32.1, 42.1) angeordneten Dichtungsring (27, 37, 47) seitlich begrenzt ist.

Fig. 1A

Fig. 1B

# Fig. 1C

Fig. 2 (Verlauf des Warm-Kalt-öls)

Welle

Warmöl

Kaltöl

Fig. 3A

Fig. 3B

Fig. 3C

## Fig. 4A

22.11  24.1  24  22.12  24.2  22.21  22.22

U →

21  22.1  21.1  22.2  21.2

## Fig. 4B

22.1  22.2

Fig. 5B

Außermittig unterstützt:

24'  22.11'  22.1'  26.1'  21'  22.12'  21.1'  27'

Fig. 5A

22.1'

∇B  ∇B

Fig. 5D

Außermittig unterstützt:

24  22.11  22.1  26.1  21  22.12  21.1  27

Fig. 5C

22.1

∇D  ∇D

Fig. 5F
Mittig unterstützt:

34'
32.11'
32.1'
36.1'
31.1'
31'
37'
32.12'

Fig. 5E

32.1'

∇F
∇F

Fig. 5H
Mittig unterstützt:

34
32.11
32.1
31.1
36.1
37
31
32.12

Fig. 5G

32.1

∇H
∇H

16

Fig. 5K

Rund:

42.11'

44'

41.1'

42.1'

46.1'

41'

47'

42.12'

Fig. 5J

42.1'

▽K ▽K

Fig. 5M

Rund:

42.11

44

41.1

42.1

46.1

41

47

42.12

Fig. 5L

42.1

▽M ▽M